# EUROPEAN PATENT SPECIFICATION

(11) **EP 1 907 338 B1**
(45) Date of publication and mention of the grant of the patent: **02.01.2013**
(21) Application number: 06765130.7
(22) Date of filing: 28.07.2006
(51) Int. Cl.: C04B 35/573, C04B 41/51, F16D 69/02, C04B 35/80

(54) **METHOD AND APPARATUS FOR TREATMENT OF PREFORMS**
VERFAHREN UND VORRICHTUNG ZUR BEHANDLUNG VON VORFORMEN
PROCEDE ET APPAREIL DE TRAITEMENT DE PREFORMES

(30) Priority: 29.07.2005 GB 0515649
(43) Date of publication of application: 09.04.2008
(73) Proprietor: Surface Transforms Plc, Cheshire CH2 4NU (GB)
(72) Inventor: FARIA, Julio Joseph, Kelsall, Cheshire CW6 ORF (GB); STEEL, Margaret Lillian, c/o Surface Transforms Plc, Ince, Cheshire CH2 4NU (GB); HATFIELD, James, York, Yorkshire YO61 4PF (GB)
(74) Representative: Hall, Matthew Benjamin
(86) International application number: PCT/GB2006/002812
(87) International publication number: WO 2007/012862

(56) References cited:
- US-B1- 6 514 562

## Description

The present invention relates to a method of treating preforms, for example, the coating or infusion of molten silicon on or into an annular shaped carbon fibre preform. It also relates to an apparatus for carrying out this method.

A clutch or brake is a device for engaging by the use of friction a pair of shafts otherwise free to run at differing speeds. In operation slip takes place between the sets of faces attached to each shaft such that shaft work is dissipated as heat. Heating of this kind is a particular feature of brake assemblies. In designing brakes for use in aircraft or in high performance cars there is an incentive to design an assembly of the lowest possible mass which in service may then reach a temperature well above red heat.

Manifesting high strength at high temperature, low density, and low combustibility, carbon-ceramic components based upon carbon fibre/carbon composites are particularly suited to this application. A common format is a flat faced circular ring. A key step in the process for making such rings is the infusion of a ring-shaped carbon/carbon composite preform with elemental molten silicon which then undergoes in part a chemical reaction to form silicon carbide within the interstices of the preform.

It is known from GB-A-1457757 to impregnate carbon preforms with molten silicon. The composite material is partially or wholly immersed in molten silicon either under vacuum or under an inert gas such as argon. In one embodiment a preform is placed in a graphite crucible with silicon powder and heated to a temperature of 1450-1550°C. The silicon powder melts and impregnates the carbon fibres of the preform. The period of immersion and/or the temperature of the molten silicon can be increased to allow the carbon matrix to react with the silicon to form silicon carbide, or a separate heat treatment can be provided.

A problem with this process is that it can be difficult to obtain consistent products because there is little control over the infusion process other than the temperature that the crucible is heated up to and how long it is heated. The process also lacks efficiency in terms of how the materials are heated and used. Further problems with this known technique are highlighted in EP-A-0861281, such as the preform floating and the equipment necessary to separate the preforms, if there are more than one, while they are hot in order to avoid them setting together on cooling.

EP-A-0861281 describes how it is desirable to avoid immersion in a bath, even partial immersion, and instead rely on capillary action to infuse the silicon. Numerous prior techniques are discussed in which a source of silicon is wicked into the surface of a preform. As an improvement on these techniques, EP-A-0861281 proposes stacking a batch of annular preforms, one on top of the next, in a furnace with a honeycomb spacer between each preform to keep the preforms apart. The cells of the honeycomb spacers hold the silicon powder until it reaches its melting temperature (1685 K), at which point the silicon melts and migrates either downwards under gravity into the top surface of a preform or upwards under capillary action into the underside of a preform. However the process can be slow and the ring-shaped preforms must be laid on their sides with their axes vertical to avoid loss of silicon through run off. Variations in silicon uptake between the gravity and capillary fed surfaces may occur leading to differences in physical properties. While it would be possible, once the preforms have cooled, to invert them and repeat the process to obtain more consistent properties, this leads to increases in terms of heating, consumption of inert gas and production time. It is also not possible to infuse silicon through the perimeter edge of the preform with this technique as it is a vertical surface when the preform is lying on its side.

Heating to the temperature required to melt elemental silicon and to promote its reaction with carbon in an inert atmosphere is difficult to achieve except by electrical means. It is known for example in GB-A-1180918 to heat a graphite crucible under vacuum in a high frequency induction furnace when melting silicon for infusion of a silicon carbide/carbon porous body. However it would also be desirable to improve the existing induction heating techniques for heating preforms, particularly where the preforms are annular and made of a conductive material, to achieve greater operational efficiency.

US-B1-6514562 discloses a method as in the preamble of claim 1.

According to the present invention there is provided a method of treating a preform which comprises the steps of:
locating a preform on a mandrel of a heating apparatus, the mandrel extending in a longitudinal direction above a melt containment means;
heating the preform;
immersing a portion of the preform in a material contained within the melt containment means; and
rotating the preform while it is dipped in the material.

The present invention provides an elegant solution to the shortcomings of the prior art and enables one or more preforms to be treated in a single sequence of processing steps. The preforms can be held spaced apart using small spacers of, for example, boron nitride provided on the mandrel. By simply rotating the preforms in the melt until sufficient material has coated or infused each preform, the processing parameters can be carefully controlled and accurately repeated for subsequent preforms, leading to more reliable and consistent products with hitherto unachievable uniformity of infiltration. Locating the preforms on a mandrel also avoids the problem of the preforms floating and enables the preforms to be withdrawn easily from the melt. The processing is fast and efficient through the use of the immersion technique and the consumption of energy and inert gas is reduced because there is just a single short processing cycle. There is less wastage of molten material compared to the wicking techniques as any material falling off the preform simply falls back into the melt containment means. As the preforms are suspended above the melt containment means on a horizontal mandrel, in the case of ring-shaped preforms it enables the perimeter edge to be treated with the molten material in addition to the flat sides of the ring.

Preferably the molten material is silicon, possibly with other elements added, for example an additive molten metal, but the molten material may comprise a molten salt or some other material that it is desired to coat or infuse a preform with. The preform is preferably made from carbon fibre or includes carbon, though many other materials are envisaged that could be used in the method, particularly where they can be heated inductively.

The preforms are preferably porous so that as they are dipped into the molten material, material coats and infuses into the structure of the preform. However, it may be desirable for products that are based on a non-porous preform just to coat the outside surface with a material like molten silicon. The method of the present invention allows for a more even coating for such preforms than is possible with conventional methods.

The preforms are preferably rigid and have approximate rotational symmetry, i.e., they are annular. For example, they may be tubular, toroidal, ring-shaped or other similar shape which can be rotated about an axis. In this regard the preforms preferably have a hole in their centre to allow them to be threaded on to a mandrel, but conceivably the method could be used where the hole in the preform is off-centre. Should it be desired, it may be possible to treat other shapes using this method, for example, polygonal shapes having three, four, five, six or more sides, irregular shapes, elliptical shapes etc. The term "annular preform" is intended to encompass all these possibilities. Brake rings for aircraft brake packs can include a series of protrusions arranged around the perimeter, resembling a toothed wheel in appearance, and there can be an even or odd number of these protrusions, i.e., the brake ring may only have approximate rotational symmetry. Such products are specifically envisaged as annular preforms for treatment in the present invention.

The preforms could be heated via a range of different heating techniques. These include an external mantel or shell, preferably of carbon which is resistively heated, a radio frequency plasma induced in argon gas in the space around the preforms, slip ring (or other contact) resistive heating of the preforms, thermal laser beam absorption at the preform surface where the preforms are rotated, and pancake induction coils in proximity with the preform perimeter.

However, preferably the preform is heated by induction heating. In contrast to the prior art arrangements, it is an attractive feature of this invention that heating of the preforms can be achieved using an inductive heating means acting from the centre of the preforms so as to induce in them a circulating electric current. This is more efficient than known induction heating furnaces that use a large coil around the outside of the furnace. Such known resonant 'tank' circuits comprising the induction coil itself, its external leads and load matching capacitors within the power supply, result in a significant proportion of the electrical power used being dissipated thermally as 'copper losses' - and this must be removed continuously by a liquid coolant flowing through the external leads and through the induction heating coil. High frequency 'pancake' coils or fingers are also sometimes used for induction heating. These high frequency systems may operate at frequencies above 10 kHz, for example 50-60 kHz. However, they tend to suffer generally from poor inductive coupling as a result of the low field strength and be wasteful of energy in consequence of the high heat loss to the extended surface of the water-cooled pancake coils or fingers.

Thus in one preferred embodiment the method includes the step of providing a closed circuit for the magnetic flux which passes through a central region of each preform. The closed circuit may be formed by an elongate magnetisable core member having ends which can be coupled to the ends of a preferably U-shaped return member. The core and return members then together provide a continuous closed loop path for the magnetic flux which intersects a central region of each preform.

By providing a closed circuit for the magnetic flux which passes through each preform, the heating process is much more efficient and greater heat inputs can be achieved. The heating circuit preferably takes the form of a transformer core with the preforms constituting the secondary circuit of the 'transformer' .

The mandrel is preferably hollow and the core member of the closed circuit preferably extends through the centre of it, or if temperatures allow, the core member may form the mandrel itself, on to which the one or more preforms may be threaded. The alternating magnetic flux is channelled along the length of the core member and through the middle of the preform. This induces an alternating current in each preform which circulates about the axis of the magnetic flux (i.e., the axis of the core member), thereby heating up the preform. Ring-shaped preforms, for example, for brake and clutch plates, can be seen as being particularly advantageous for this heating technique. The outer perimeter of the preform is also unobstructed over a full circle and so is available for access to achieve dip coating or infusion as may be required.

This advantageous heating technique can be applied to one or more preforms independently of the dip coating or infusion process described above. For example, it would be possible to treat the preforms with silicon or other molten material in a more conventional method where the preforms are stacked one on top of the other with their axes in the vertical direction and their upper and / or lower surfaces in contact with a source of silicon that can be melted and wicked into the preform. By locating the preforms on a core member which forms part of a closed circuit for a magnetic flux path and then performing the heating step, the greater energy efficiency of those arrangements can still be achieved.

Thus in another aspect, which is not claimed, a method of treating a preform comprises the steps of:
locating a preform on a core member of an induction heating apparatus, the core member defining a portion of a magnetic flux path;
locating the core member in registration with a means for completing the magnetic flux path in order to form a closed circuit for magnetic flux passing through the preform;
generating an alternating magnetic flux within the closed circuit to induce a circulating current in the preform and heat-up the preform; and
infusing molten material into the hot preform.

In another preferred embodiment where a non-porous preform is used, the infusing step may be replaced with the step of coating the surface of the preform with a molten material. However, preferably whether it is an infusion or coating process the material is applied by immersing a portion of the preform in molten material contained in a melt containment means.

In most of the embodiments of the invention that are envisaged, the preform is not located directly on the core member, i.e., the preform is not in direct contact with the core member, but is supported on an assembly, for example, the mandrel, which is then located coaxially over the core member and the mandrel may or may not be in contact with the core member.

In the case where the preforms are good electrical conductors the circulating electrical current induced in them results in the preforms themselves being heated. Where the preforms are insufficiently good electrical conductors then one or more ring-shaped susceptors of a suitable conductive material may be interposed between the preforms on the mandrel or core member. These susceptors, being themselves heated by induced current, then function to heat the adjacent preforms by radiative and convective heat exchange.

In a preferred arrangement, the heat from the inductively heated preform(s) is conveyed to the material in the melt containment means to heat and thereby melt the material. This may be achieved through radiant exchange of heat from the preform(s)/susceptors or heat can be conveyed by dipping the hot preform(s)/susceptors in the powdered or granulated material in the melt containment means. Thus in this preferred arrangement the preforms and / or susceptors may be the only heat source for melting the material in the melt containment means. Alternatively, if preferred, the material in the melt containment means may be heated by independent heating means.

Provided herein is an apparatus useful for contacting at elevated temperature one or more rigid annular preforms (e.g., tubular, toroidal or ring-shaped preforms) with an additive molten material so as either to coat the preforms with melt material by partial immersion or, in the case of porous preforms, to infuse them with melt by making use of capillary action. Optionally a chemical reaction may be promoted between the material of the preform and that of the coating or infused melt, for example, by raising the temperature further once coating or infusion has been achieved.

According to the above method, preferably the step of infusing molten material into the hot preform is performed by immersing a portion of the preform in a material contained within a melt containment means and rotating the preform while it is dipped in the material. However in some embodiments the wicking properties may be such that a full rotation of the preform(s) is not required.

According to another broad aspect of the invention there is provided an apparatus for treating one or more preforms comprising:
a mandrel for supporting the one or more preforms within the apparatus;
a melt containment means for containing material with which to treat the one or more preforms, the mandrel being rotatable about an axis extending above the melt containment means;
an induction heating circuit; and
a mechanism for moving the mandrel and/or melt containment means closer to the other for partially immersing the one or more preforms into material contained within the melt containment means.

The apparatus thus provides a novel solution to the problem of supporting the one or more preforms in a high temperature oven where coating or infusion of a molten material takes place by dipping the preforms into a melt. It avoids the drawbacks associated with the immersion apparatus of the prior art and provides an apparatus which is able to dip and rotate one or more preforms in a pool of molten material such as silicon. Preferably the apparatus uses an induction heating circuit with a closed loop magnetic flux path as discussed above in order to benefit from the improved efficiency of heat input.

Thus in preferred embodiments the induction heating circuit comprises magnetic flux conducting members that define a path for the magnetic flux which is in the form of a closed loop, wherein the magnetic flux path extends in part along the mandrel axis. Means is also provided for generating an alternating magnetic flux within the closed loop of the magnetic flux path. This may be in the form of a primary coil wound around a section of the magnetic flux path and supplied with an alternating current.

More specifically the means for generating an alternating magnetic flux takes the form of a transformer core, with the ring-shaped preforms forming the secondary circuit of the 'transformer'. The magnetic flux conducting members may comprise ferromagnetic material, for example, in the form of a core member which is inserted right through the mandrel tube, and one or more other flux conducting members that extend in a path which closes a loop from one end of the core member to the other.

This 'transformer' arrangement enables lower frequencies to be used than in conventional pancake coil induction heating arrangements, for example 400 Hz. The selection of 400 Hz for the preferred frequency of operation is by no means accidental. Induction heating arrangements are known in which bearings and wheel rims are heated inductively in a similar manner by being mounted on a mandrel to form a transformer circuit. The power supplies for this known equipment operate at mains frequency, i.e. 50/ 60 Hz, in order to provide a modest heating, for example, up to 150°C. For the brake rings in the preferred embodiments of the present invention, a higher frequency is required in order to heat the preforms up to a much higher temperature, preferably up to around 1850°C. 'Tripler' circuits are available to provide frequencies of 150/180 Hz but these are disapproved of by the electricity supply companies because of the harmonics they can throw back into the supply. 'Inverter' systems, such as we prefer (using a locally generated supply) allow many frequencies to be available, but 400 Hz is an attractive one to adopt in practice because of the equipment already available for aircraft ground power units, oil platforms, etc. The 400 Hz frequency also just happens to suit the size of hole in the preferred brake rings, i.e., of around 100-500 mm, when using laminated 4% silicon-iron for the magnetisable core member and this in turn allows the central core to be made small enough to fit within a central aperture of the rings. Using a mains frequency, for example, would require a much bigger mandrel, too big for the current vehicular brake applications, though it may be useful in other applications.

Thus in accordance with an embodiment of an induction heating apparatus, there is provided an apparatus for heating one or more rings, which are preferably in the form of carbon preforms, comprising:
a mandrel for supporting the one or more rings within the apparatus;
an induction heating circuit comprising magnetic flux conducting members that define a path for the magnetic flux which is in the form of a closed loop, wherein the magnetic flux path extends in part along the mandrel axis; and
a power supply for delivering an alternating current to energise an alternating magnetic flux within the induction heating circuit,
wherein: the power supply is arranged to deliver an alternating current having a frequency of 200 Hz or greater, but preferably less than 1.5 kHz, and most preferably at around 400 Hz;
a ferromagnetic core extends through the mandrel as part of the induction heating circuit; and
the external diameter of the mandrel for supporting the one or more rings is 600 mm or less, preferably 350 mm or less, and more preferably less than 250 mm.

The small diameter of the mandrel allows the apparatus to be useful for heating relatively small parts such as car brakes and aircraft brakes (e.g., parts less than 750 mm in diameter). It is envisaged that the heating apparatus has further applications extending beyond that of heating articles for the infusion or coating with a molten material, including a variety of heat treatment processes. Preferably the ferromagnetic core is a laminated iron core, preferably a laminated 4% silicon-iron core. The mandrel must be able to support the one or more rings at very high design temperatures, for example, 2000°C. Preferably the mandrel comprises a glass tube for supporting the one or more rings, preferably via a set of spacers. Preferably there is means for providing a high velocity gas stream passing through the mandrel. This gas stream is maintained to remove heat leaking from the rings inside the furnace.

Preferably the magnetic flux conducting members are in the form of an elongate core member and a substantially U-shaped return member (which could be single piece or made from three sections of magnetic flux conducting material joined end to end), the ends of the core member being in registration with the ends (i.e., the poles) of the U-shaped return member to form a closed circuit for the magnetic flux.

A primary coil for the 'transformer core' is preferably wound onto this core member and connected to a supply of alternating current. An apparatus according to the current invention then provides that when a source of AC electrical power is connected to the primary coil, an alternating current, typically of several thousand amps, circulates within the said preforms or ring-shaped susceptors only, efficiently producing the heating required for the process. There is no electrical heating of other components and no restriction of access to the outer perimeter of the preforms.

Preferably the axis of the mandrel extends in the horizontal direction across the melt containment means. The mandrel (in practice a mandrel assembly) preferably includes a mandrel tube, preferably a glass tube made from a borosilicate glass or from fused quartz. Bearings may be provided to support the ends of this mandrel tube and allow it to rotate. The glass mandrel tube is preferably protected from the heat of the hot elements by a layer of thermal insulation material that preferably extends along its length. On to this mandrel tube near to either end is mounted a pair of hubs. Where the hubs are of electrically conductive material, these are segmented to avoid circular currents being generated and to allow for thermal expansion. Mounted upon these hubs are three (or more) rods, preferably of a carbon composite material, that extend parallel to the axis of the mandrel tube and are held in a spaced relationship by the pair of hubs. The circular pitch of the rods is set to correspond to the size of the hole in the annular preform so that the rods can support the preform through contact with the inner surface of the preform. The resulting mandrel assembly is free to be rotated complete with the set of preforms which is assembled upon it and outside the insulating sleeve, and which the mandrel assembly itself supports at intervals along its length. Preferably means are provided to cool the inner surface of the mandrel tube. This may be in the form of a gas feed to direct a flow of cooling gas through the core of the mandrel tube in order to keep it cool.

Thus in the apparatus of the present invention, the mandrel assembly preferably comprises a tubular element, a pair of spaced apart hubs arranged on the tubular element, preferably a layer of insulation surrounding the tubular element, and a plurality of rods supported by the hubs with the axes of the rods extending parallel to the tubular element, the rods being in a spaced relationship for contacting an inner surface of the one or more preforms and supporting the one or more preforms thereby. This structure for the mandrel has been found to provide a clever solution to the problem of how to suspend the preforms at the very high temperatures required above a pool of molten silicon.

In some arrangements it may be preferable to include a central support for the mandrel to help support the load from the preforms. For example, in an arrangement for heating twelve preforms, six preforms can be arranged on either side of a central support. In other embodiments, where there is a large number of preforms and/or a substantial weight to support, the mandrel may include more than one support spaced along its length between the ends.

An apparatus according to the present invention includes a melt containment means, which can be one or more impermeable dishes to contain the additive material to be melted, and positioned below the assembly of preforms. Two or more dishes could be provided at different heights to treat preforms of different sizes simultaneously. In another embodiment the two (or more) dishes could be arranged either side of a central support. A mechanism is provided for raising and lowering this dish or dishes (or alternatively for raising and lowering the mandrel itself) so that the rotating preforms may be partially immersed into the contents of the dish or dishes either before melting is completed or, if preferred, after the melting point of the additive material has been reached and enough heat absorbed to melt it all completely. In the first case the preforms will be coated or infused with melt progressively as heat is added and melt forms steadily from the charge of solid in the dish. In the second case the melt may, if required, be heated above the melting point before it is brought into contact with the rings to be treated. The second case provides for coating or infusion to take place both more rapidly and at a temperature independent of the actual melting point.

With the magnetic flux channelled in a closed circuit through the preforms, another advantage is that a melt containment means in the form of a fine-grained synthetic graphite dish arranged beneath the preforms does not interfere with the induction heating even though the dish is a large conductive element. This would not be the case with a more conventional 'tank circuit' often employed in induction ovens and alternative materials which can operate at temperatures of up to 2200 K or a different arrangement may have to be considered.

With appropriate sizing of the melt containment means, typically taking the form of a shallow dish, it may be possible to add into the dish, prior to commencement of heating, all of the material to be melted - as powder, granules, or lumps. When sufficient heat has been applied this material will become melted. By adjusting the height of the dish and slowly rotating the mandrel which supports the preforms, the perimeter edge of these preforms and a sectoral part of their face area may be immersed in the melt and the melt material may be either coated onto these faces or infused into them under the action of capillary forces.

Alternatively the preforms may be heated with the dish empty and the material to be melted added to the dish in a steady stream through a suitable duct or charge pipe.

The apparatus preferably further includes external thermal insulation fully enclosing the preforms to be treated together with the melt containment means, a split-casing vessel provided with cooling means for the vessel walls and which fully encloses this insulation, and either a vacuum or an atmosphere of controlled composition maintained within the vessel, for example an atmosphere of argon.

It is also advantageous for the apparatus to include optionally a means to displace one or more upper portions of the external insulation without opening the enclosing vessel, a feature which reduces the time required for the manufacturing cycle by accelerating cooling once treatment of the preforms has been completed.

A preferred embodiment will now be discussed in greater detail, by way of example only and with reference to the accompanying drawings, in which:
Fig. 1 shows a sectional side elevation of an arrangement in accordance with a preferred embodiment of the present invention;
Fig. 2 shows a sectional end view of the arrangement shown in Fig. 1; and
Fig. 3 shows a sectional view through a mandrel hub that is preferably used in the apparatus of the present invention.

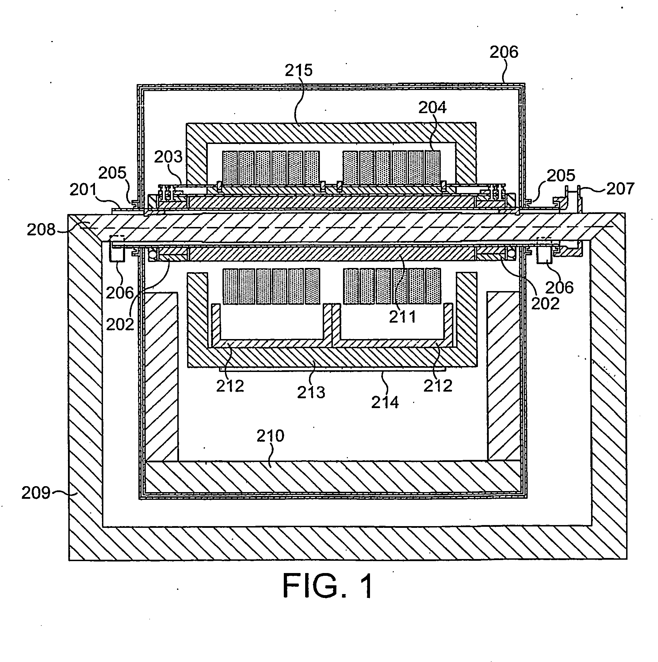

As shown in Fig. 1, a quartz or borosilicate glass mandrel tube 201 carries a pair of segmented hubs 202 located outside the hot zone which in turn carry a set of three carbon composite rods 203 running parallel to the glass tube and outside it. These carbon composite rods are clamped into the hubs 202 with provision for differential thermal expansion at one end. The three rods 203 then serve to support the complete set of preforms 204 to be processed, the preform rings 204 being kept apart with small spacers of boron nitride (not shown) or of other suitable material.

The preferred size of the preform rings 204 being treated are rings typically with an external diameter of about 250 mm to 750 mm and internal diameter of about 50 to 600 mm, preferably 100 to 500 mm. One specific example has an external diameter of 350 mm and an internal diameter of 165 mm. Another specific example is an external diameter of 385 mm and an internal diameter of 205 mm. Different mandrels 201 would be made up for different ring sizes, each with a relatively tight range of acceptable sizes. The coil sizes, number of turns, number of rings etc. can be adjusted to achieve the required power input and hence ring temperature.

The thickness of the brake ring for automobile uses might vary between 10 and 50 mm depending on application. For example brake rings for Formula One cars are currently up to 28 mm thick. Other automotive applications tend to be in the range of 10 to 40 mm. Brake rings for aircraft are generally in the 20-30 mm range. Brake rings for trains can be 750 mm in diameter and between 50-100 mm thick.

The glass mandrel tube 201 passes at either end through a lip seal 205 and is supported at each end upon a pair of rollers 206 which provide also for it to be driven in slow rotation. Other mechanisms could be used to rotate the mandrel tube 201 such as belt, chain or gear drives connected to a source of rotation.

An end cap 207 provides for high velocity cooling air to be fed under pressure into the core of the rotating glass mandrel tube 201, the cooling air escaping to atmosphere at the other end of the tube.

A removable laminated silicon iron armature rail 208 passes right through the glass mandrel tube 201 from end to end to provide for an alternating electrical current to be induced in each of the preforms 204. The required magnetic circuit is closed by means of a U-shaped element 209, also of laminated silicon iron construction, upon the free ends of which the armature rail 208 is permitted to rest.

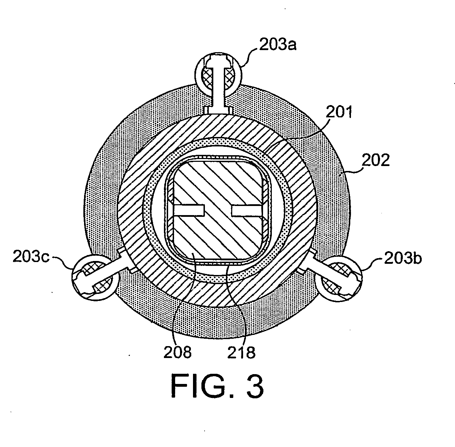

The armature rail 208 itself is overwound with the primary winding 218 (see Fig. 3) formed from insulated copper winding strip and connected by cables to a suitable external source of single phase AC electrical power. For many purposes a supply frequency of 400 Hz is found to be suitable, although it may be possible to heat larger preforms rings 204 adequately at a lower frequency. For carbon preform rings 204 the induced voltage is generally in the range of 3 to 10 volts per turn and the current in each preform ring 204 may easily exceed 1000 amps. If desired the primary winding 218 may be provided on a different section of the magnetic flux path.

A sleeve 211 of high temperature thermal insulation material is fitted over the outside of the glass mandrel tube 201. If it is of electrically conductive material, this thermal insulation 211 is formed in cylindrical segments to avoid completing an electrical circuit around the armature rail 208 and thereby to prevent the circulation of any induced electrical current in the insulation layer 211 itself.

One or more boat shaped dishes 212 are provided beneath the assembly of preform rings 204 to contain the additive melt material. Where the additive is elemental silicon then dense synthetic graphite is found to be a suitable material for melt containment up to a temperature of at least 2150 K. The dish is supported upon a layer of thermal insulation material 213 and may be raised and lowered by a suitable mechanism 214 located below in the cool zone.

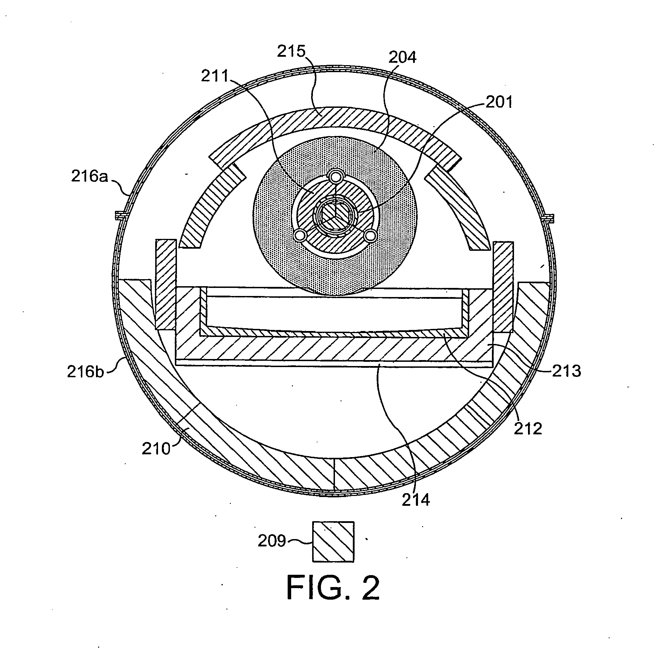

The melt containment dishes 212 and the complete set of ring preforms 204 are further enclosed by an upper layer of rigidly supported insulation 215 in such a way that a radiant high temperature cavity is formed to conserve heat. The whole is then enclosed with a pressure vessel shell 216 which provides for evacuation of air at the start of a process cycle and to contain an inert atmosphere (usually of argon) during the process cycle. As shown in Fig. 2, preferably the pressure vessel shell 216 is roughly cylindrical in shape, with the lower portion of the shell lined by briquettes 210, also of synthetic graphite, to protect the wall of the vessel 216 from damage in the case of a spillage of hot melt.

The pressure vessel shell 216 is provided with a water cooled jacket and formed in upper and lower halves 216a, 216b with electrical insulation placed in a flange between the two halves 216a, 216b to prevent any induced electrical current from circulating in the shell 216 itself.

A mechanism (not shown) within the cool zone of the pressure vessel 216 then provides for the upper insulation 215 to be displaced from its normal position in order to shorten the process cycle by promoting loss of heat to the vessel water jacket once treatment of the preforms has been completed.

In testing, the cool down period was gauged to be reduced by more than half by displacing the upper insulation 215 in this way. In one example with 12 rings, the time to cool down from 1850°C to 200°C was around 7 minutes with the displaceable upper insulation 215 and around 3 hours with fixed insulation. These are significantly faster cool down times than previous techniques where the preforms are stacked horizontally in a chamber, with the cool down period shortened by as much as six times.

It is therefore a key feature of the preferred apparatus that induction heating is facilitated by the provision of a hollow mandrel tube 201 strong enough to support the weight of the preforms, thermally insulated on its outer face and cooled internally, typically by a stream of air. This hollow tube 201 then provides a path for both the magnetic core 208 and the primary coil 218 of a conventional electrical transformer to be passed right through it from end to end, the closed loop of the transformer core being completed by a U-shaped return element 209 outside the cylindrical vessel 216 which must be provided to contain the inert atmosphere.

The mandrel tube 201 is formed in such a manner, or from such material, that it does not itself form an electrical circuit path around the iron core 208 and therefore does not itself become heated by any circulating electrical current. Typically it may be formed from a length of fused quartz or borosilicate glass tube.

Alternatively it may be made from a length of austenitic stainless steel tube provided with one or more insulated overlap joints such that it does not provide a complete electrical circuit around the transformer core. The same principle is then applied to the thermal insulation 211, 213, 215 required and to any other components which fully encompass the mandrel. Should they be of electrically conductive material, then these are formed into isolated cylindrical segments or with slots in their circumference such that they form no complete electrical circuit around the transformer core. Similarly the enclosing vessel itself 216 takes the form of a split metal casing having an electrically insulating joint inserted between its two halves 216a, 216b (Fig. 2).

The transformer core 208 itself may be formed from laminated silicon-iron sheet, from laminated mu-metal sheet, or from a suitable ferrite material. For use below 500 Hz laminated silicon-iron will usually be preferred on cost/performance grounds.

A protective hearth 210 formed from suitably cut briquettes of dense graphite may be placed optionally inside the lower part of the pressure vessel shell as a barrier to protect the shell itself against damage from any spills of melt additive which may take place accidentally - for example if the containment dish were to break when it was full with melt. Without this protection it is likely that a melt spill into the vessel base would result in film boiling of the coolant inside the water jacket. The coolant would then be unable to protect the shell from irreversible thermal damage.

Thus the method and apparatus of the present invention, at least in their preferred embodiments can be seen as being particularly suited to the efficient implementation of one step in the manufacture of brake or clutch rings where annular or ring-shaped preforms of a porous carbon-carbon composite material are to be infused with elemental silicon at temperatures above its melting point of 1685 K to form a carbon-ceramic component. The method and apparatus, however, have much wider application and can be used in a variety of situations where it is desired to coat or infuse the surface of a rigid preform with a molten material during a manufacturing process.

## Claims

1. A method of treating a preform (204) which comprises the steps of:
heating the preform; and
immersing a portion of the preform in a material contained within a melt containment means (212); and is **characterised by** the steps of
locating the preform on a mandrel (201) of a heating apparatus, the mandrel extending in a longitudinal direction above the melt containment means; and
rotating the preform while it is dipped in the material.

2. A method as claimed in claim 1, wherein the mandrel (201) is rotated about a substantially horizontal axis.

3. A method as claimed in claim 1 or 2, wherein the preform (204) is heated by an inductive heating means acting from the centre of the preform so as to induce a circulating electric current in the preform.

4. A method as claimed in claim 3, wherein the inductive heating means has a magnetic flux path defined in part by a core member (208), and the method includes the step of locating the core member in registration with a means (209) for completing the magnetic flux path in order to form a closed circuit for the magnetic flux that passes through the preform (204).

5. A method as claimed in any preceding claim, wherein the preform (204) is heated to a temperature of greater than 1650 K by the heating apparatus.

6. A method as claimed in any preceding claim, wherein the preform (204) comprises carbon, preferably in the form of carbon fibres.

7. A method as claimed in any preceding claim, wherein the preform (204) is an annular-shaped preform having a hole extending through a central region.

8. A method as claimed in claim 7, wherein the preform (204) is a ring-shaped preform for a brake or clutch plate.

9. A method as claimed in any preceding claim, wherein the material in the melt containment means (212) is silicon or a silicon based material.

10. A method as claimed in any preceding claim, wherein the preform (204) is dipped into the material contained within the melt containment means (212) before the material has reached its melting temperature in order to transfer heat energy to the material in the melt containment means through contact with the material.

11. A method as claimed in any preceding claim, wherein the method is part of a process for coating the preform (204) with the material in the melt containment means (212).

12. A method as claimed in any of claims 1 to 10, wherein the method is part of a process for infusing the preform (204) with the material in the melt containment means.

13. A method as claimed in claim 11 or 12, including the step of heating the preform (204) to cause a chemical reaction to occur between the preform and the material from the melt containment means (212).

14. A method as claimed in any preceding claim, wherein more than one preform (204) is located on the mandrel (201) prior to performing the heating, immersing and rotating steps.

15. An apparatus for treating one or more preforms (204) comprising:
a mandrel (201) for supporting the one or more preforms within the apparatus;
a melt containment means (212) for containing material with which to treat the one or more preforms, the mandrel extending in a longitudinal direction above the melt containment means and being rotatable about an axis extending above the melt containment means;
an induction heating circuit (208, 209); and
a mechanism (214) for moving the mandrel and/or melt containment means closer to the other for partially immersing the one or more preforms into material contained within the melt containment means.

16. An apparatus as claimed in claim 15, wherein the induction heating circuit (208, 209) comprises magnetic flux conducting members that define a path for the magnetic flux which is in the form of a closed loop, wherein the magnetic flux path extends in part along the mandrel axis.

17. An apparatus as claimed in claim 16, wherein the magnetic flux conducting members comprise a linear core member (208) extending through the mandrel (201) and a U-shaped magnetic flux return member (209).

18. An apparatus as claimed in claim 16 or 17, wherein a coil (218) is provided around the core member (208) which is connectable to a source of alternating current for generating an alternating magnetic flux within the closed loop of the magnetic flux path.

19. An apparatus as claimed in any of claims 16 to 18, wherein the melt containment means (212) is arranged underneath the mandrel (201).

20. An apparatus as claimed in claim 19, wherein thermal insulation (213) is provided beneath the melt containment means (212).

21. An apparatus as claimed in any of claims 15 to 20, wherein the mandrel (201) comprises a tubular element (201), a pair of spaced apart hubs (202) arranged on the tubular element, preferably a layer of insulation (211) surrounding the tubular element, and a plurality of rods (203) supported by the hubs with the axes of the rods extending parallel to the tubular element, the rods being held in a spaced relationship for contacting an inner surface of the one or more preforms (204) and supporting the one or more preforms thereby.

22. An apparatus as claimed in claim 21, wherein the tubular element (201) is made of glass, preferably of fused quartz or borosilicate glass.

23. An apparatus as claimed in claim 21 or 22, wherein a supply of forced cooling gas is connected to one end of the tubular element (201) to cool its interior.

24. An apparatus as claimed in claim 21, 22 or 23, wherein the hubs (202) are segmented.

25. An apparatus as claimed in any of claims 21 to 24, wherein the rods (203) are of carbon composite material having either solid or tubular cross section.

26. An apparatus as claimed in any of claims 21 to 25, wherein either a driven roller (206) or a drive belt engages the tubular element (201) of the mandrel assembly to rotate it along with the preform(s) (204) supported upon it.

27. An apparatus as claimed in any of claims 15 to 26, wherein the melt containment means (212) is a dish made of graphite.

28. An apparatus as claimed in any of claims 15 to 27, wherein the apparatus includes a split-casing vessel (216) with cooling means for the vessel walls.

## Patentansprüche

1. Verfahren zur Behandlung eines Vorformlings (204), umfassend die folgenden Schritte:
Erhitzen des Vorformlings, und
Eintauchen eines Teils des Vorformlings in ein Material, das in einem Schmelzbehälter (212) enthalten ist,
und **gekennzeichnet durch** die folgenden Schritte:
Anordnen des Vorformlings auf einen Dorn (201) einer Heizeinrichtung, wobei der Dorn in Längsrichtung oberhalb des Schmelzbehälters verläuft, und
Drehen des Vorformlings, während er in das Material eingetaucht wird.

2. Verfahren nach Anspruch 1, wobei der Dorn (201) um eine im Wesentlichen horizontale Achse gedreht wird.

3. Verfahren nach Anspruch 1 oder 2, wobei der Vorformling (204) durch eine Induktionsheizeinrichtung erhitzt wird, die von der Mitte des Vorformlings aus wirkt, um in dem Vorformling einen elektrischen Kreisstrom zu induzieren.

4. Verfahren nach Anspruch 3, wobei die Induktionsheizeinrichtung einen Magnetflusspfad besitzt, der zum Teil durch ein Kernelement (208) festgelegt wird, und das Verfahren den Schritt der Anordnung des Kernelements in Verbindung mit einer Einrichtung (209) zur Vollendung des Magnetflusspfads umfasst, um einen geschlossenen Kreis für den durch den Vorformling (204) fließenden Magnetflusses zu bilden.

5. Verfahren nach einem der vorhergehenden Ansprüche, wobei der Vorformling (204) durch die Heizeinrichtung auf eine Temperatur von mehr als 1650 K erwärmt wird.

6. Verfahren nach einem der vorhergehenden Ansprüche, wobei der Vorformling (204) Kohlenstoff umfasst, vorzugsweise in Form von Kohlenstofffasern.

7. Verfahren nach einem der vorhergehenden Ansprüche, wobei der Vorformling (204) ein ringförmiger Vorformling ist mit einem sich durch einen Zentralbereich erstreckenden Loch.

8. Verfahren nach Anspruch 7, wobei der Vorformling (204) ein ringförmiger Vorformling für eine Brems- oder Kupplungsscheibe ist.

9. Verfahren nach einem der vorhergehenden Ansprüche, wobei das Material in dem Schmelzbehälter (212) Silikon oder ein auf Silikon basierendes Material ist.

10. Verfahren nach einem der vorhergehenden Ansprüche, wobei der Vorformling (204) in das sich in dem Schmelzbehälter (212) befindliche Material eingetaucht wird, bevor das Material seine Schmelztemperatur erreicht hat, um Wärmeenergie an das Material in dem Schmelzbehälter durch Kontakt mit dem Material zu übertragen.

11. Verfahren nach einem der vorhergehenden Ansprüche, wobei das Verfahren Teil eines Vorgangs zur Beschichtung des Vorformlings (204) mit dem Material in dem Schmelzbehälter (212) ist.

12. Verfahren nach einem der Ansprüche 1 bis 10, wobei das Verfahren Teil eines Vorgangs zur Infusion des Vorformlings (204) mit dem Material in dem Schmelzbehälter ist.

13. Verfahren nach einem der Ansprüche 11 oder 12, einschließend den Schritt des Erhitzens des Vorformlings (204) zur Herbeiführung einer chemischen Reaktion zwischen dem Vorformling und dem Material aus dem Schmelzbehälter (212).

14. Verfahren nach einem der vorhergehenden Ansprüche, wobei mehr als ein Vorformling (204) auf dem Dorn (201) angeordnet wird, bevor die Schritte des Erhitzens, des Eintauchens und des Drehens durchgeführt werden.

15. Einrichtung zur Behandlung von einem oder mehreren Vorformlingen (204) umfassend:
einen Dorn (201) zum Tragen von einem oder mehreren Vorformlingen innerhalb der Einrichtung,
einen Schmelzbehälter (212) zur Aufnahme von Material, mit dem ein oder mehrere Vorformlinge behandelt werden, wobei der Dorn in Längsrichtung oberhalb des Schmelzbehälters verläuft und um eine oberhalb des Schmelzbehälters verlaufende Achse drehbar ist,
einen Induktionsheizkreis (208, 209), und
eine Vorrichtung (214) zur Bewegung des Dorns und/oder des Schmelzbehälters näher an den jeweils anderen heran zum teilweisen Eintauchen des einen oder mehrerer Vorformlinge in das sich in dem Schmelzbehälter befindliche Material.

16. Einrichtung nach Anspruch 15, wobei der Induktionsheizkreis (208, 209) Leitelemente für den Magnetfluss umfasst, die einen Magnetflusspfad festlegen, der die Form eines geschlossenen Kreislaufs hat, wobei der Magnetflusspfad teilweise entlang der Dornachse verläuft.

17. Einrichtung nach Anspruch 16, wobei die Leitelemente für den Magnetfluss ein lineares Kernelement (208), das durch den Dorn (201) verläuft, und ein U-förmiges Rückflusselement (209) für den Magnetfluss umfassen.

18. Einrichtung nach Anspruch 16 oder 17, wobei eine Spule (218) um das Kernelement (208) vorgesehen ist, welche mit einer Quelle von Wechselstrom verbindbar ist zur Erzeugung eines magnetischen Wechselflusses innerhalb des geschlossenen Kreislaufs des Magnetflusspfads.

19. Einrichtung nach einem der Ansprüche 16 bis 18, wobei der Schmelzbehälter (212) unterhalb des Dorns (201) angeordnet ist.

20. Einrichtung nach Anspruch 19, wobei Wärmeisolierung (213) unterhalb des Schmelzbehälters (212) vorgesehen ist.

21. Einrichtung nach einem der Ansprüche 15 bis 20, wobei der Dorn (201) ein rohrförmiges Bauteil (201), ein Paar beabstandet zueinander angeordnete Naben (202), die auf dem rohrförmigen Bauteil angeordnet sind, vorzugsweise eine isolierende Schicht (211), die das rohrförmige Bauteil ummantelt, und mehrere Stäbe (203), die von den Naben getragen sind, umfasst, wobei die Achsen der Stäbe parallel zu dem rohrförmigen Bauteil verlaufen und die Stäbe beabstandet sind, um eine Innenfläche des einen oder mehrerer Vorformlinge (204) zu kontaktieren, und dadurch den einen oder mehrere Vorformlinge zu tragen.

22. Einrichtung nach Anspruch 21, wobei das rohrförmige Bauteil (201) aus Glas, vorzugsweise aus Quarzglas oder Borosilikatglas, ist.

23. Einrichtung nach Anspruch 21 oder 22, wobei eine Gaszufuhr zur Zwangskühlung an ein Ende des rohrförmigen Bauteils (201) zur Kühlung seines Innenraums angeschlossen ist.

24. Einrichtung nach Anspruch 21, 22 oder 23, wobei die Naben (202) segmentiert sind.

25. Einrichtung nach einem der Ansprüche 21 bis 24, wobei die Stäbe (203) aus einem Kohlenstoffverbundwerkstoff mit entweder einem massiven oder röhrenförmigen Querschnitt bestehen.

26. Einrichtung nach einem der Ansprüche 21 bis 25, wobei entweder eine angetriebene Walze (206) oder ein Antriebsriemen das rohrförmige Bauteil (201) des Dornaufbaus in Eingriff nimmt, um es zusammen mit dem oder den von ihm getragenen Vorformling(en) (204) zu drehen.

27. Einrichtung nach einem der Ansprüche 15 bis 26, wobei der Schmelzbehälter (212) eine Schale aus Graphit ist.

28. Einrichtung nach einem der Ansprüche 15 bis 27, wobei die Einrichtung ein Gefäß (216) mit geteiltem Gehäuse mit Kühlmittel für die Gefäßwände umfasst.

## Revendications

1. Procédé de traitement d'une préforme (204) qui comprend les étapes consistant à :
chauffer la préforme ; et
immerger une portion de la préforme dans un matériau contenu dans un moyen (212) contenant une masse fondue ; et est **caractérisé par** les étapes consistant à :
disposer la préforme sur un mandrin (201) d'un appareil de chauffage, le mandrin s'étendant dans une direction longitudinale au-dessus du moyen contenant la masse fondue ; et
faire tourner la préforme tandis qu'elle est immergée dans le matériau.

2. Procédé selon la revendication 1, dans lequel le mandrin (201) est soumis à une rotation autour d'un axe sensiblement horizontal.

3. Procédé selon la revendication 1 ou la revendication 2, dans lequel la préforme (204) est chauffée par un moyen de chauffage par induction agissant depuis le centre de la préforme de manière à induire un courant électrique circulant dans la préforme.

4. Procédé selon la revendication 3, dans lequel le moyen de chauffage par induction présente un trajet de flux magnétique défini en partie par un élément de noyau (208) et le procédé comprend l'étape de mise en place de l'élément de noyau en registre avec un moyen (209) pour compléter le trajet de flux magnétique afin de former un circuit fermé pour le flux magnétique qui passe à travers la préforme (204).

5. Procédé selon l'une quelconque des revendications précédentes, dans lequel la préforme (204) est chauffée à une température de plus de 1650 K par l'appareil de chauffage.

6. Procédé selon l'une quelconque des revendications précédentes, dans lequel la préforme (204) comprend du carbone, de préférence sous la forme de fibres de carbone.

7. Procédé selon l'une quelconque des revendications précédentes, dans lequel la préforme (204) est une préforme de forme annulaire ayant un trou passant à travers une région centrale.

8. Procédé selon la revendication 7, dans lequel la préforme (204) est une préforme en forme d'anneau pour une plaque de frein ou d'embrayage.

9. Procédé selon l'une quelconque des revendications précédentes, dans lequel le matériau qui se trouve dans le moyen (212) contenant la masse fondue est du silicium ou un matériau à base de silicium.

10. Procédé selon l'une quelconque des revendications précédentes, dans lequel la préforme (204) est immergée dans le matériau contenu dans le moyen (212) contenant la masse fondue avant que le matériau n'ait atteint sa température de fusion afin de transférer de l'énergie thermique au matériau du moyen contenant la masse fondue par contact avec le matériau.

11. Procédé selon l'une quelconque des revendications précédentes, dans lequel le procédé fait partie d'un processus de revêtement de la préforme (204) par le matériau qui se trouve dans le moyen (212) contenant la masse fondue.

12. Procédé selon l'une quelconque des revendications 1 à 10, dans lequel le procédé fait partie d'un processus d'infusion de la préforme (204) par le matériau du moyen contenant la masse fondue.

13. Procédé selon la revendication 11 ou la revendication 12, comprenant l'étape de chauffage de la préforme (204) pour amener une réaction chimique à se produire entre la préforme et le matériau provenant du moyen (212) contenant la masse fondue.

14. Procédé selon l'une quelconque des revendications précédentes, dans lequel plus d'une préforme (204) est disposée sur le mandrin (201) avant d'effectuer les étapes de chauffage, d'immersion et de rotation.

15. Appareil pour traiter une ou des préformes (204) comprenant :
un mandrin (201) pour supporter la ou les préformes à l'intérieur de l'appareil ;
un moyen (212) contenant une masse fondue pour contenir le matériau servant à traiter la ou les préformes, le mandrin s'étendant dans une direction longitudinale au-dessus du moyen contenant la masse fondue et pouvant tourner autour d'un axe s'étendant au-dessus du moyen contenant la masse fondue ;
un circuit de chauffage par induction (208, 209) ; et
un mécanisme (214) pour déplacer le mandrin et/ou le moyen contenant la masse fondue plus près l'un de l'autre afin d'immerger en partie la ou les préformes dans le matériau contenu dans le moyen contenant la masse fondue.

16. Appareil selon la revendication 15, dans lequel le circuit de chauffage par induction (208, 209) comprend des éléments conducteurs de flux magnétique qui définissent un trajet pour le flux magnétique sous la forme d'une boucle fermée, le trajet du flux magnétique s'étendant en partie le long de l'axe du mandrin.

17. Appareil selon la revendication 16, dans lequel les éléments conducteurs de flux magnétique comprennent un élément de noyau linéaire (208) s'étendant à travers le mandrin (201) et un élément de retour de flux magnétique (209) en forme de U.

18. Appareil selon la revendication 16 ou la revendication 17, dans lequel il est prévu un enroulement (218) autour de l'élément de noyau (208), qui peut être connecté à une source de courant alternatif pour générer un flux magnétique alternatif dans la boucle fermée du trajet de flux magnétique.

19. Appareil selon l'une quelconque des revendications 16 à 18, dans lequel le moyen (212) contenant la masse fondue est aménagé en dessous du mandrin (201).

20. Appareil selon la revendication 19, dans lequel un isolement thermique (213) est prévu en dessous du moyen (212) contenant la masse fondue.

21. Appareil selon l'une quelconque des revendications 15 à 20, dans lequel le mandrin (201) comprend un élément tubulaire (201), une paire de moyeux espacés (202) aménagés sur l'élément tubulaire, de préférence une couche isolante (211) entourant l'élément tubulaire et une pluralité de tiges (203) supportées par les moyeux avec les axes des tiges qui s'étendent parallèlement à l'élément tubulaire, les tiges étant maintenues à distance l'une de l'autre pour venir en contact avec une surface interne de la ou des préformes (204) et supporter la ou les préformes de la sorte.

22. Appareil selon la revendication 21, dans lequel l'élément tubulaire (201) est constitué de verre, de préférence de quartz fusionné ou de verre au borosilicate.

23. Appareil selon la revendication 21 ou la revendication 22, dans lequel une source de gaz de refroidissement forcé est raccordée à une extrémité de l'élément tubulaire (201) pour refroidir sa partie interne.

24. Appareil selon la revendication 21, 22 ou 23, dans lequel les moyeux (202) sont segmentés.

25. Appareil selon l'une quelconque des revendications 21 à 24, dans lequel les tiges (203) sont formées d'un matériau composite carboné ayant une section transversale pleine ou tubulaire.

26. Appareil selon l'une quelconque des revendications 21 à 25, dans lequel un roulement entraîné (206) ou une courroie d'entraînement s'engage sur l'élément tubulaire (201) de l'ensemble de mandrin pour le faire tourner conjointement avec la ou les préformes (204) qu'il supporte.

27. Appareil selon l'une quelconque des revendications 15 à 26, dans lequel le moyen (212) contenant la masse fondue est une cuvette constituée de graphite.

28. Appareil selon l'une quelconque des revendications 15 à 27, dans lequel l'appareil comprend une cuve à coque fendue (216) avec des moyens de refroidissement pour les parois de la cuve.
